# EUROPÄISCHE PATENTANMELDUNG

(11) **EP 0 826 868 A1**
(43) Veröffentlichungstag der Anmeldung: **04.03.1998**
(21) Anmeldenummer: 97111913.6
(22) Anmeldetag: 12.07.1997
(51) Int. Cl.: F01N 3/02, F01N 5/02, F02M 25/07, F01N 9/00, F02B 37/00

(54) **Verfahren zur Abgasreinigung einer Brennkraftmaschine**

(30) Priorität: 24.08.1996 DE 19634263
(71) Anmelder: Volkswagen Aktiengesellschaft, 38436 Wolfsburg (DE)
(72) Erfinder: Geiger, Istvan, Dipl.-Ing., 38104 Braunschweig (DE)

(57) **Zusammenfassung**

Die Erfindung betrifft ein Verfahren zur Abgasreinigung einer Brennkraftmaschine (1), insbesondere eines Kraftfahrzeuges, mit einem in einer Abgasleitung (7) der Brennkraftmaschine (1) angeordneten Partikelfilter (2) zur Filterung der im Abgas enthaltenen Partikel und einer Zuheizeinrichtung (3), der die Partikel (16) zugeführt und in der die Partikel (16) verbrannt werden, wobei die Abgase der Zuheizeinrichtung (3) in einer Abgasleitung (8) in eine Saugleitung (5) oder eine mit der Saugleitung (5) strömungstechnisch in Verbindung stehende bzw. verbindbare Leitung zurückgeführt werden, sowie eine Vorrichtung zur Durchführung des Verfahrens.

Mit der Erfindung wird es ermöglicht, die in dem Partikelfilter (2) gefilterten Partikel (16) in einer Zuheizeinrichtung (3) nachzuverbrennen, ohne daß die bei der Verbrennung entstehenden Abgase in die Umgebung abgegeben werden.

## Beschreibung

Die Erfindung betrifft ein Verfahren zur Abgasreinigung einer Brennkraftmaschine, insbesondere eines Kraftfahrzeuges, mit einem in einer Abgasleitung der Brennkraftmaschine angeordneten Partikelfilter zur Filterung der im Abgas enthaltenen Partikel und einer Zuheizeinrichtung, der die Partikel zugeführt und in der die Partikel verbrannt werden sowie eine Vorrichtung zur Durchführung des Verfahrens.

Aus der deutschen Offenlegungsschrift DE 38 21 138 A1 ist eine Filterung und Nachverbrennung der Rußpartikel mit einem Partikelfilter und die Nutzung der daraus gewonnenen Wärmeenergie zur Beheizung eines Fahrzeuginnenraumes bekannt. Eine Rückführung der Abgase der Brennkraftmaschine ist hier jedoch nicht vorgesehen.

Eine ähnliche Anordnung ist aus der deutschen Patentschrift DE 37 10 054 C2 bekannt. Auch hier ist ein Brenner zur Regenerierung des Rußfilters vorgesehen. Die im Brenner freigesetzte Wärmeenergie wird während der Phasen, in denen die Motorabgase keinen ausreichenden Wärmeinhalt zur Beheizung des Fahrzeuges liefern, ebenfalls zur Beheizung eines Fahrzeuginnenraumes verwendet.

Bei beiden Vorschlägen werden die Abgase aus der Partikelnachverbrennung an die Umgebung abgegeben.

In der deutschen Offenlegungsschrift DE 42 34 841 A1 und der deutschen Patentschrift DE 43 40 463 C2 werden Brennkraftmaschinen beschrieben, bei denen ein Rußfilter mit einer Regeneration des Rußfilters und eine Rückführung des Abgases beschrieben ist. Die Nachverbrennung der Rußpartikel findet hier jedoch in dem Rußfilter statt, dies hat den Nachteil, daß die Verbrennung unkontrolliert und explosionsartig erfolgt.

Die Abgase aus der Nachverbrennung der Partikel werden auch hier an die Umgebung abgegeben.

Aufgabe der Erfindung ist es, ein Verfahren und eine Vorrichtung zur Durchführung des Verfahrens zu liefern, mit dem der Schadstoffanteil in dem Abgas einer Brennkraftmaschine verringert werden kann.

Die Aufgabe wird durch ein Verfahren des Patentanspruchs 1 und eine Vorrichtung des Patentanspruchs 11 gelöst. Vorteilhafte Aus- und Weiterbildungen sind in den Unterensprüchen angegeben.

Die Reduzierung der Schadstoffe wird durch die Partikelfilterung mit anschließender Nachverbrennung der Partikel in einer Zuheizeinrichtung und Rückführung der Abgase der Zuheizeinrichtung in die Saugleitung oder eine mit der Saugleitung strömungstechnisch in Verbindung stehende bzw. verbindbare Leitung der Brennkraftmaschine erreicht. Die Zurückführung der Abgase der Zuheizeinrichtung in die Saugleitung kann direkt durch Anschluß der Zuheizeinrichtung an die Saugleitung oder über eine Abgasleitung erfolgen. Eine zusätzliche Abgabe von Abgasen der Zuheizeinrichtung an die Umgebung wird dadurch verhindert.

Derartige Zuheizeinrichtungen werden zur zusätzlichen Beheizung des Fahrzeuginnenraumes bei Fahrzeugen mit modernen Brennkraftmaschinen mit sehr hohen Wirkungsgraden vorgesehen, bei denen z. B. in der Warmfahrphase nicht genügend Wärme zur Beheizung des Fahrzeuginnenraumes zur Verfügung steht. Die bei der Nachverbrennung der Partikel in der Zuheizeinrichtung entstehende Wärme wird an einen Wärmeträger übertragen. Gleichzeitig werden die bei der Verbrennung entstehenden Abgase gekühlt. Die Rückführung von gekühlten Abgasen ist sehr wünschenswert, da hierdurch die Leistung der Brennkraftmaschine in bekannter Art und Weise erhöht wird.

Ist in der Saugleitung der Brennkraftmaschine ein Luftmengenmesser vorgesehen, so wird das Abgas der Zuheizeinrichtung vorzugsweise in Strömungsrichtung der Frischluft nach dem Luftmengenmesser in die Saugleitung oder eine mit der Saugleitung strömungstechnisch in Verbindung stehende bzw. verbindbare Leitung zurückgeführt. Hierdurch wird vermieden, daß die Messung der angesaugten Frischluftmenge verfälscht wird. Für eine Sollabgasrückführrate wird eine bestimmte Soll-Frischluftmenge in der Saugleitung berechnet. Die angesaugte Frischluftmenge wird mit einem Luftmengenmesser gemessen. Weicht die angesaugte Frischluftmenge von der Soll-Frischluftmenge ab, so wird die Abgasrückführung mit der Ventileinrichtung entsprechend nachgeregelt, bis die Soll-Frischluftmenge und damit die Sollabgasrückführrate erreicht ist. Mit der Rückführung des Abgases der Zuheizeinrichtung an einer Stelle nach dem Luftmengenmesser ist sichergestellt, daß die Frischluftmengenmessung nicht verfälscht wird, und somit trotz der zusätzlichen Rückführung der Abgase der Zuheizeinrichtung die Abgasrückführrate über die Frischluftmengenmessung und die Ventileinrichtung in der Abgasrückführleitung geregelt werden kann.

Ist ein Abgasturbolader vorgesehen, so wird vorgeschlagen, die Abgase der Zuheizeinrichtung in Strömungsrichtung der Frischluft vor dem Verdichter des Turboladers in die Saugleitung zurückzuführen. Dadurch wird verhindert, daß der Verdichter Frischluft aus der Saugleitung in die Abgasleitung der Zuheizeinrichtung drückt.

Das Anschalten des Brenners der Zuheizeinrichtung erfolgt entweder, wenn die Heizung des Fahrzeuginnenraumes insbesondere in der Warmfahrphase betätigt wird, oder wenn die Betriebstemperatur der Brennkraftmaschine unterhalb einer vorgegebenen Temperatur liegt, oder wenn der Partikelfilter regeneriert wird.

Der Partikelfilter wird regeneriert, wenn die Partikelmenge in dem Partikelfilter einen vorgegebenen Wert überschreitet. Dies kann entweder intermittierend erfolgen, wenn im normalen Fahrbetrieb die vorgegebene Partikelmenge überschritten wird oder wenn zur kurzzeitigen Reinigung eines NOₓ₋Speichers die Brennkraftmaschine mit einem fetteren Gemisch betrieben wird und dadurch die Partikelmenge ansteigt. Bei der Regenerierung des Partikelfilters werden die Partikel aus dem Partikelfilter z. B. durch Ausblasen in die Zuheizeinrichtung eingeleitet. Dieser Vorgang wird durch geeignete Mittel sensiert und führt zum Anschalten des Brenners in der Zuheizeinrichtung.

Die durch die Verbrennung der Rußpartikel gewonnene Wärmeenergie kann erfindungsgemäß zur Beheizung des Fahrzeuginnenraumes in solchen Phasen genutzt werden, in denen die Motorabgase keinen ausreichenden Wärmeinhalt liefern. Durch die Nutzung der durch die Nachverbrennung der Rußpartikel gewonnene Wärmeenergie zur Beheizung des Fahrzeuginnenraumes wird eine ausreichende Beheizung desselben, insbesondere in der Warmfahrphase, erreicht.

Weiterhin kann die gewonnene Wärmeenergie auch zum Anwärmen der Brennkraftmaschine im kalten Zustand und damit zum schnelleren Erreichen der Betriebstemperatur genutzt werden.

Ferner ist es möglich, daß die Betriebstemperatur der Brennkraftmaschine z. B. bei Talfahrten in bergigem Gelände unterhalb der optimalen Betriebstemperatur sinkt. In diesem Fall kann die in der Zuheizeinrichtung gewonnene Wärme zum Anheben der Betriebstemperatur der Brennkraftmaschine genutzt werden.

Als eine einfache Möglichkeit der Einleitung der Abgase der Zuheizeinrichtung in die Saugleitung oder eine mit dieser strömungstechnisch verbundenen oder verbindbaren Leitung wird eine bekannte Venturidüse vorgeschlagen. In der Venturidüse wird durch die Beschleunigung der Strömung ein statischer Druckabfall erzeugt und damit das Abgas der Zuheizeinrichtung angesaugt.

Im folgenden wird die Erfindung anhand eines Ausführungsbeispieles näher beschrieben.

Die Zeichnungen zeigen:
- Fig. 1:: eine schematische Darstellung einer Brennkraftmaschine mit Abgasrückführung, Partikelfilter und Zuheizeinrichtung,
- Fig. 2:: eine Venturidüse mit Einleitung des Abgases der Zuheizeinrichtung,
- Fig. 3:: Partikel und NOₓ-Anteile im Abgas bei zunehmender Abgasrückführrate.

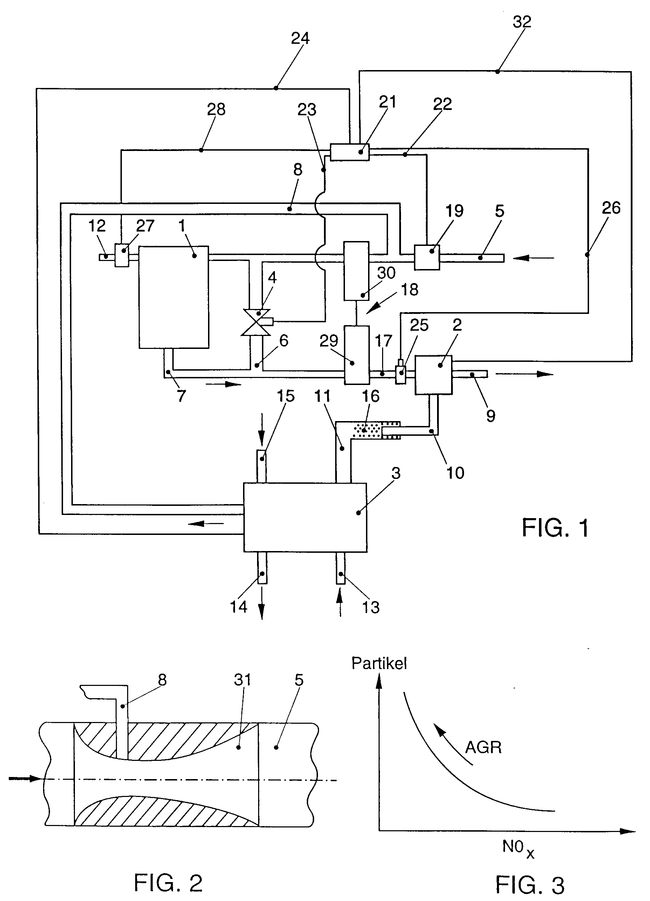

In der Figur 1 ist schematisch eine Brennkraftmaschine 1 zu erkennen. Die Brennkraftmaschine 1 wird über eine erste Brennstoffleitung 12, gesteuert durch die Stelleinrichtung 27, mit Brennstoff und über eine Saugleitung 5 mit Frischluft versorgt. Der Frischluft in der Saugleitung 5 wird durch die Abgasleitung 8 das Abgas der Zuheizeinrichtung 3 und über die Abgasrückführleitung 6, gesteuert durch die Ventileinrichtung 4, ein Teil des Abgases der Brennkraftmaschine 1 zugemischt. Das Abgas der Zuheizeinrichtung 3 kann auch in die Abgasrückführleitung 6 oder in einer anderen Stelle in die Saugleitung 5 zurückgeführt werden.

In Fig. 2 ist eine einfache Möglichkeit der Einleitung der Abgase der Zuheizeinrichtung mittels einer Venturidüse 31 zu erkennen. Das Abgas der Zuheizeinrichtung 3 wird über die Abgasleitung 8 in die in der Saugleitung 5 befindlichen Venturidüse 31 eingeleitet. Die Frischluft strömt in Pfeilrichtung durch die Venturidüse 4. Die Strömung wird durch die Düsenwirkung beschleunigt, wodurch wiederum der statische Druck in der Strömung sinkt. Durch die statische Druckabsenkung wird das Abgas aus der Abgasleitung 8 in die Düse eingesaugt.

Das Abgas der Brennkraftmaschine 1 wird durch die Abgasleitung 7 abgeführt. Ein Teil des Abgases der Brennkraftmaschine wird über die Abgasrückführleitung 6 zurückgeführt, der übrigbleibende Teil wird durch den Partikelfilter 2 geleitet und nach der Filterung über die Abgasleitung 9 an die Umgebung abgegeben.

Die mit dem Partikelfilter 2 aus dem Abgas gefilterten Partikel werden bei Überschreiten einer vorgegebenen Partikelmenge über die Leitung 10 in der Saugleitung 11 der Frischluft der Zuheizeinrichtung 3 vorzugsweise über einen Luftstrom zugemischt.

Die in der Leitung 10 geführten Partikel können verständlicherweise auch in der Zuheizeinrichtung 3 direkt in den hier nicht dargestellten Brennraum geleitet oder dem Brennstoff in der zweiten Brennstoffleitung 15 beigemischt werden.

Wird in dem Partikelfilter 2 oder in der Leitung 10 sensiert, daß Partikel in die Zuheizeinrichtung 3 geleitet werden, so wird ein Signal über die Signalleitung 32 an die Verarbeitungseinrichtung 21 gegeben, die wiederum über die Signalleitung 24 den Brenner in der Zuheizeinrichtung 3 zuschaltet.

In der Zuheizeinrichtung 3 werden der über die zweite Brennstoffleitung 15 zugeführte Brennstoff mit der Frischluft und den Partikeln vermischt und verbrannt. Die dabei freigesetzte Wärmeenergie wird an einen geeigneten Wärmeträger, wie z. B. Wasser, übertragen. Der Wärmeträger wird der Zusatzeinrichtung 3 über eine Zulaufleitung 13 zugeführt und über eine Ablaufleitung 14 wieder abgeführt. Denkbar wäre selbstverständlich auch, die Zuheizeinrichtung 3 direkt von dem Wärmeträger umströmen zu lassen, wie z. B. durch Einbau in einen Kühler eines Kraftfahrzeuges. Durch Einbau der Zuheizeinrichtung in den Kühler kann die Wärme an den Fahrzeuginnenraum oder an die Brennkraftmaschine abgegeben werden.

In der Saugleitung 5 ist ein mit der Verarbeitungseinrichtung 21 über die Signalleitung 22 verbundener Luftmengenmesser 19 angeordnet, mit dem die angesaugte Frischluftmenge gemessen wird. Mit der bekannten Frischluftmenge wird die Ist-Abgasrückführrate in der Verarbeitungseinrichtung 21 ermittelt. Das zurückgeführte Abgas der Zuheizeinrichtung 3 wird in Strömungsrichtung der Frischluft nach dem Luftmengenmesser 19 zurückgeführt, wodurch die Messung der angesaugten Frischluft nicht verfälscht wird.

Weicht die berechnete Abgasrückführrate von einer vorgegebenen Abgasrückführrate ab, so wird die Abgasrückführung in der Abgasrückführleitung 6 mit der Ventileinrichtung 4 soweit nachgeregelt, bis die berechnete Abgasrückführrate mit der vorgegebenen Abgasrückführrate unter Berücksichtigung vorgegebener Toleranzen übereinstimmt. Die Zurückführung der Abgase der Zuheizeinrichtung 3 in die Saugleitung 5 nach dem Luftmengenmesser 19 hat damit keinen nachteiligen Einfluß auf die Regelung der Abgasrückführung.

Ist ein Abgasturbolader 18 mit einem Verdichter 30 in der Saugleitung 5 und einer Turbine 29 in der Abgasleitung 7 vorgesehen, so wird das Abgas der Zuheizeinrichtung 3 in Strömungsrichtung der Frischluft vor dem Verdichter 30 in die Saugleitung 5 zurückgeführt. Hierdurch wird verhindert, daß Frischluft von dem Verdichter in die Abgasleitung 8 gedrückt wird.

Das Signal der Lambdasonde 25 wird in der Verarbeitungseinrichtung 21 ausgewertet und daraus ein Stellsignal für eine in der ersten Brennstoffleitung 12 angeordneten Stelleinrichtung 27 zur Steuerung der Brennstoffzufuhr gebildet.

In Fig. 3 ist schematisch der NO_{X}- und der Partikelanteil im Abgas bei zunehmender Abgasrückführung zu erkennen.

Durch die Abgasrückführung wird in bekannter Weise der NO_{X}-Anteil im Abgas reduziert. Nachteilig ist jedoch, daß durch die Abgasrückführung die Brennraumtemperatur gesenkt wird und damit der Partikelanteil im Abgas ansteigt. Durch die Filterung der Partikel aus dem Abgas in dem Partikelfilter 2 und die Nachverbrennung der Partikel in der Zuheizeinrichtung 3 kann nun vermieden werden, daß der erhöhte Partikelanteil an die Umgebung abgegeben wird. Vielmehr wird es durch die Erfindung ermöglicht, die Abgasrückführrate zu erhöhen und somit den NO_{X}-Anteil im Abgas weiter zu senken, ohne daß der Partikelanteil in dem an die Umgebung durch die Abgasleitung 9 abgegebenen Abgas erhöht wird.

### BEZUGSZEICHENLISTE

- 1: Brennkraftmaschine
- 2: Partikelfilter
- 3: Zuheizeinrichtung
- 4: Ventileinrichtung
- 5: Saugleitung
- 6: Abgasrückführleitung
- 7; 8; 9: Abgasleitung
- 10: Leitung
- 11: Saugleitung
- 12: erste Brennstoffleitung
- 13: Zulaufleitung
- 14: Ablaufleitung
- 15: zweite Brennstoffleitung
- 16: Partikel
- 17: Abgasleitung
- 18: Abgasturbolader
- 19: Luftmengenmesser
- 20: Abgasmengenmesser
- 21: Verarbeitungseinrichtung
- 22;23;24;26;28;32: Signalleitung
- 25: Lambda-Sonde
- 27: Stelleinrichtung
- 29: Turbine
- 30: Verdichter
- 31: Venturidüse

## Patentansprüche

1. Verfahren zur Abgasreinigung einer Brennkraftmaschine, insbesondere eines Kraftfahrzeuges, mit einem in einer Abgasleitung der Brennkraftmaschine angeordneten Partikelfilter zur Filterung der im Abgas enthaltenen Partikel und einer Zuheizeinrichtung, der die Partikel zugeführt und in der die Partikel verbrannt werden, dadurch gekennzeichnet, daß die Abgase der Zuheizeinrichtung (3) in eine Saugleitung (5) oder eine mit der Saugleitung (5) strömungstechnisch in Verbindung stehende bzw. verbindbare Leitung zumindest teilweise eingeleitet werden.

2. Verfahren nach Anspruch 1, dadurch gekennzeichnet, daß die Abgase der Zuheizeinrichtung (3) in Strömungsrichtung der Frischluft in der Saugleitung (5) nach einem in der Saugleitung (5) angeordneten Luftmengenmesser (19) zurückgeführt werden.

3. Verfahren nach einem der Ansprüche 1 oder 2, dadurch gekennzeichnet, daß ein Abgasturbolader (18) mit einer in der Abgasleitung (7) angeordneten Turbine (29) und einem in der Saugleitung (5) angeordneten Verdichter (30) vorgesehen ist und die Abgase der Zuheizeinrichtung (3) in Strömungsrichtung der Frischluft in der Saugleitung (5) vor dem Verdichter (30) zurückgeführt werden.

4. Verfahren nach einem der Ansprüche 1 bis 3, dadurch gekennzeichnet, daß ein Teil des Abgases der Brennkraftmaschine (1) aus der Abgasleitung (7) über eine Ventileinrichtung (4) und eine Abgasrückführleitung (6) in die Saugleitung (5) zurückgeführt wird.

5. Verfahren nach einem der Ansprüche 1 bis 4, dadurch gekennzeichnet, daß die Partikel (16) aus dem Partikelfilter (2) der Zuheizeinrichtung (3) über einen Luftstrom zugeführt werden.

6. Verfahren nach einem der Ansprüche 1 bis 5, dadurch gekennzeichnet, daß die Partikel (16) bei Überschreiten einer vorgegebenen Partikelmenge in dem Partikelfilter (2) der Zuheizeinrichtung zugeführt werden.

7. Verfahren nach einem der Ansprüche 1 bis 6, dadurch gekennzeichnet, daß ein Brenner der Zuheizeinrichtung (3) angeschaltet wird, wenn die Partikel (16) aus dem Partikelfilter (2) der Zuheizeinrichtung (3) zugeführt werden.

8. Verfahren nach einem der Ansprüche 1 bis 7, dadurch gekennzeichnet, daß die durch die Verbrennung der Partikel (16) freigesetzte Wärmeenergie zur Beheizung eines Fahrzeuginnenraumes genutzt wird.

9. Verfahren nach einem der Ansprüche 1 bis 8, dadurch gekennzeichnet, daß die durch die Verbrennung der Partikel (16) freigesetzte Wärmeenergie zum Anwärmen der Brennkraftmaschine (1) oder zum Erhöhen der Betriebstemperatur der Brennkraftmaschine genutzt wird.

10. Vorrichtung zur Abgasreinigung einer Brennkraftmaschine, insbesondere eines Kraftfahrzeuges, mit einem in einer Abgasleitung der Brennkraftmaschine angeordneten Partikelfilter zur Filterung der im Abgas enthaltenen Partikel und einer Zuheizeinrichtung, der die Partikel zuführbar und in der die Partikel (16) verbrennbar sind, dadurch gekennzeichnet, daß die Abgase der Zuheizeinrichtung (3) in eine Saugleitung (5) oder in eine mit der Saugleitung (5) strömungstechnisch in Verbindung stehende bzw. verbindbare Leitung zumindest teilweise zurückführbar sind.

11. Vorrichtung nach Anspruch 10, dadurch gekennzeichnet, daß die Abgase der Zuheizeinrichtung (3) in Strömungsrichtung der Frischluft in der Saugleitung (5) nach einem in der Saugleitung (5) angeordneten Luftmengenmesser (19) zurückführbar sind.

12. Vorrichtung nach Anspruch 10 oder 11, dadurch gekennzeichnet, daß ein Abgasturbolader (18) mit einer in der Abgasleitung (7) angeordneten Turbine (29) und einem in der Saugleitung (5) angeordneten Verdichter (30) vorgesehen ist und die Abgase der Zuheizeinrichtung (3) in Strömungsrichtung der Frischluft in der Saugleitung (5) vor dem Verdichter (30) zurückführbar sind.

13. Vorrichtung nach einem der Ansprüche 10 bis 12, dadurch gekennzeichnet, daß ein Teil des Abgases der Brennkraftmaschine (1) aus der Abgasleitung (7) über eine Ventileinrichtung (4) und eine Abgasrückführleitung (6) in die Saugleitung (5) zurückführbar ist.

14. Vorrichtung nach einem der Ansprüche 10 bis 13, dadurch gekennzeichnet, daß die Brennkraftmaschine (1) eine selbstzündende Brennkraftmaschine ist.

15. Vorrichtung nach einem der Ansprüche 10 bis 14, dadurch gekennzeichnet, daß die Partikel (16) bei Überschreiten einer vorgegebenen Partikelmenge in dem Partikelfilter (2) der Zuheizeinrichtung (2) zuführbar sind.

16. Vorrichtung nach einem der Ansprüche 10 bis 15, dadurch gekennzeichnet, daß ein Brenner der Zuheizeinrichtung (3) in Abhängigkeit von der zugeführten Partikelmenge aus dem Partikelfilter (2) anschaltbar bzw. abschaltbar ist.

17. Vorrichtung nach einem der Ansprüche 10 bis 16, dadurch gekennzeichnet, daß die Partikel (16) aus dem Partikelfilter (2) der Zuheizeinrichtung (3) über einen Luftstrom zuführbar sind.

18. Vorrichtung nach einem der Ansprüche 10 bis 17, dadurch gekennzeichnet, daß die Abgase der Zuheizeinrichtung (3) in einer Venturidüse einleitbar sind.
